# EUROPEAN PATENT APPLICATION

(11) **EP 1 854 512 A1**
(43) Date of publication of application: **14.11.2007**
(21) Application number: 06713125.0
(22) Date of filing: 06.02.2006
(51) Int. Cl.: A63B 69/00, G09B 5/08

(54) **INTERNET LESSON SYSTEM**

(30) Priority: 23.02.2005 JP 2005046567
(71) Applicant: Katayama, Muneomi, Tokyo 1600011 (JP)
(72) Inventor: Katayama, Muneomi, Tokyo 1600011 (JP)
(74) Representative: Vossius & Partner
(86) International application number: PCT/JP2006/301982
(87) International publication number: WO 2006/098096

(57) **Abstract**

[Problem]

There is provided an Internet lesson system, in which even if training person and the instructor are respectively in the remote place, lessons of motions of sports, performance or action, etc. can easily be performed through the Internet.

[Means for solving the problems]

In the Internet lesson, there is two screen tool on WEB, the system is downloaded from the Internet when necessary at any time, the instructor inputs the line tool and the voice onto two screens from backward, forward the and side and transmits, and animation with line tool and voice to PC or cellular phone of training person.

## Description

### [Technical field]

The present invention relates to a system for taking lessons of an operation or posture of sports, performance or action, etc. through the Internet.

### [Background Art]

As this kind of lesson system, a video teaching apparatus, in which with the use of a video equipment, an image of the training person's operation is projected onto the right half on a monitor television picture, an image for the teaching material is projected onto the left half on the monitor television picture, and those, who train, compare both images to study own action, has been described in Japanese Utility Model Application laid-opened No. 192,670/1983.

Moreover, the action diagnosis apparatus, that images and diagnoses own action, has been described in JP, H02-71773, A.

In addition, the golf form photographing method and apparatus thereof in the golf practice range, in which the image of own golf swing is imaged with a plurality of cameras and is projected onto the screen of the monitor television, and the image photographed from a different imaging place is projected onto the screen of the monitor television in the form of the picture-in-picture, have been described in JP, H03-236868, A.
[Patent document 1]
Refer to Patent Application No. H06-201396
[Patent document 1]
Refer to JP, S58-192670, U
[Patent document 1]
Refer to JP, H02-71773, A
[Patent document 1]
Refer to JP, H03-236868, A

### [Description of the Invention]

### [Problem to be solved]

In both of these kinds of lesson system, images of the monitor screen are merely seen, even if own action is learnt from the instructor, the own action is only pointed out by oral.

Thus, the system in which the image of the own action and the image of the instructor's action are projected onto two screens respectively on the monitor screen, the instructor draws the straight line, the curve or the circle onto these screens with the touch pen, and the problem of the training person's action is taught, has not been developed.

In addition, even if training person and the instructor are respectively at the remote place, it is not developed to take the golf lesson through the Internet until today.

### [Solution for the Problem]

An object of the present invention is to provide a system in which the own motion image and the motion image of the instructor are projected onto two screens respectively on the monitor screen, and the instructor draws the straight line, the curve or the circle by the touch pen on these screens, to advise the problem of training person's motion is taught.
Another object of the present invention is to provide an Internet lesson system, in which even if training person and the instructor are respectively in the remote place, lessons of motions of sports, performance or action, etc. can easily be performed through the Internet.

According to the present invention, there is provided an internet lesson system comprising: a motion analyzer (MA) including an image displaying processor for processing and displaying images to which the training person's motion is photographed from arbitrary 2 directions of side, forward and rear, and in which two screen motion analyzing tool is installed, means provided to the motion analyzer and for entering the processed image from the motion analyzer to a motion data base provided to Web server on the internet, further comprising: a personal computer or a cellular phone on instructor's side where two screen motion analyzing tool is downloaded by accessing the motion data base of the Web server through the internet and a personal computer or a cellular phone on user side where two screen motion analyzing tool is downloaded by accessing the motion data base of the Web server through the internet, wherein the user applies for the lesson from his personal computer or from the above motion analyzer to the instructor in the remote place, to receive the pointed advice from the instructor while comparing own motion of sports, performance or action etc. and instructor's motion of sports, performance or action, etc. on the two screen motion analyzing tool.

Moreover, according to the present invention, the above motion analyzer comprises an image display processing means including an imaging portion having at least a couple of cameras and a regeneration means having an image display portion displayed by two juxtaposed screens, two screen type motion analyzing tool having transmission button to Web, in which each screen is individually displayed and analyzed, the motion photographing in two directions and at same lesson angle is performed, a simultaneous regeneration of the motion image in two directions can be performed, straight-curve line and circle or the like can be drawn freely on the motion image for lesson, comparison with other motion can be performed because of the same lesson angle, and even the face angle can be identified, a simple photograph operating means having a simple photographing mechanism according to a touch panel and an automatic motion photographing mechanism according to an infrared sensor and for making a motion photographing possible according to own timing, an user management means having an ID issue function, for managing the motion image by ID, and having management terminal, that grasps usage condition about customers information and system, a preservation means of motion image capable of printing out as sequential photographs, and an accounting means having a coin box for collecting motion photographing fee.

### [Effect(s) of invention]

According to the present invention, the lesson can be performed through the Internet, so that, there is a considerable advantage that the lesson can be received on the desired place at the desired time from his preferred instructor.

### [Best mode(s) for carrying-out of the invention]

That is, the present invention is realized by confirming the fact that the Internet lesson system can perform the lesson of the motion or the posture of sports, performance or action et a1, on the Internet, in which lessons of sports of golf, baseball, and soccer, etc. and various motions and postures of the dance and volleyball, etc. were performed between users and instructors in various fields through the Internet from the remote place at desired time.
Principal part of the motion analyzer is already clear from Japanese Patent Application No. H06-201396 filed by the present inventor. In the present invention, this motion analyzer is made to progress further, and various functions are added thereto, so that the Internet lesson system, in which on the Internet, the lesson of the motion or the posture of sports, performance or action et a1. can be performed, was developed.
In this way, the present invention uses the Internet of an interactive type, so that information, in which imaged analog image is converted into a digital image, is preserved in the motion data base of the Web server on the Internet, and thus browsing and analyzing of the motion history can be performed on the Internet, moreover, the motion image and the customer's information can be performed uniform management or the like, therefore all information can be stored in the motion data base of the Web server.

### Example 1

The embodiment of the present invention is explained with reference to the drawings.
In the present invention, for the sake of convenience, the lesson of the golf swing is explained as an example. As shown in Fig, 1, at a golf driving range, the user (training person) swings a golf club in front of a motion analyzer according to the present invention installed here, a series of swing motions are imaged or photographed from two directions of forward, rear and side by a camera of the motion analyzer automatically, the photographed analog image is signal-processed by an image displaying and processing means of the motion analyzer, to convert into a digital image, and the converted digital image is projected onto two screens on the monitor screen of the image displaying processor, respectively, and is entered in the motion data base of the Web server on the Internet by compressing the Web button.

If necessary, the digital image is preserved on the internet or is preserved in CD-ROM or is preserved in the motion analyzer of the cellular phone and the driving range, or can be printed out as sequential photographs.

At this time, the user (training person) applies for the lesson to the desired instructor of instructors published in the lesson application screen of the personal computer or the cellular phone of the instructor (for example, belonging teaching pro golfer or tour pro golfer) from the member site, while seeing the screen of the personal computer or the cellular phone at once in the golf driving range.

The instructor, to which the lesson is applied, downloads the two screen type motion analyzing tool from the motion data base of the Web server on the Internet to his personal computer or cellular phone, lesson offerer's swing motion is projected onto the one screen to check the swing motion one coma at a time on the screen, and offerer's swing motion is analyzed while freely drawing on the screen in straight-curve lines and circle or the like, and while adding the character and the voice.
The offerer (user) can receive the lesson while seeing a series of the analysis on the screen of own personal computer or the cellular phone.

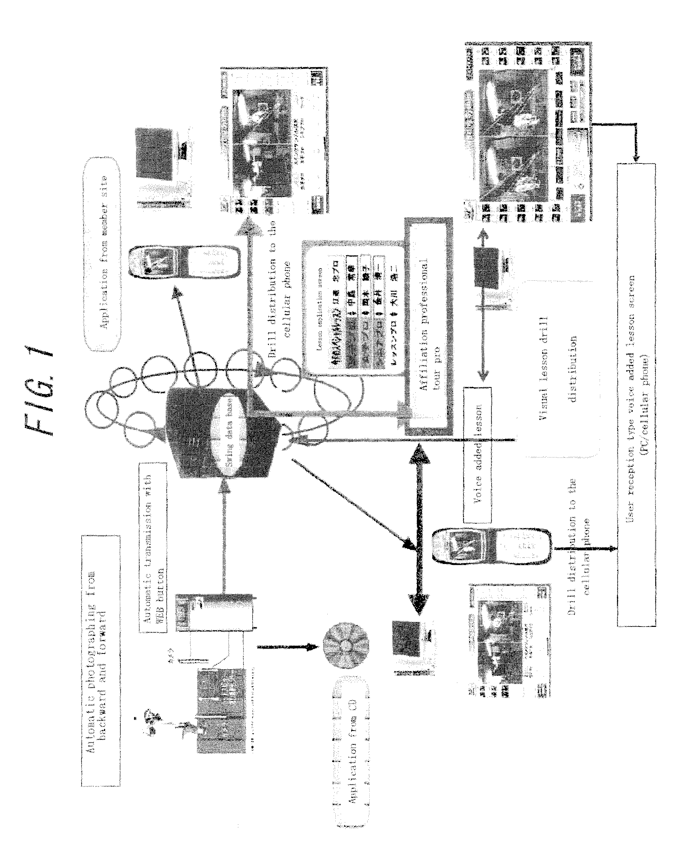

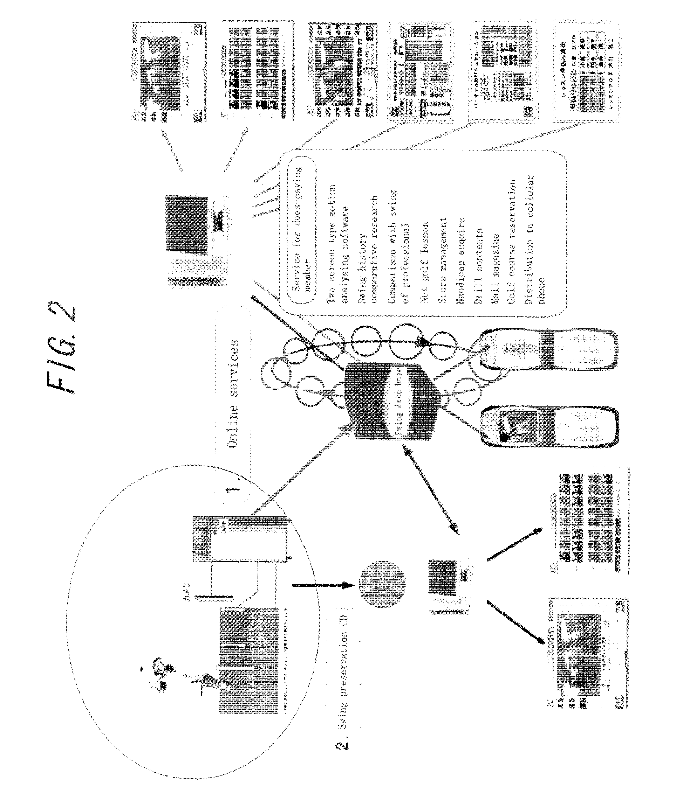

Moreover, in the present invention, as shown in Fig. 1, the two screen type motion analyzing tool is downloaded from the motion data base of the Web server on the above described Internet, various functions are added thereto as shown in Fig. 2, and following online services for the dues-paying member directing can be begun.

These service are various services such as besides the above two screen motion analysis, motion (swing), history comparison research, comparison with swing of golf pro, internet golf lesson, score management, handicap acquire, drill contents, mail magazine, reservation of golf course, message distribution etc. to cellular phone.

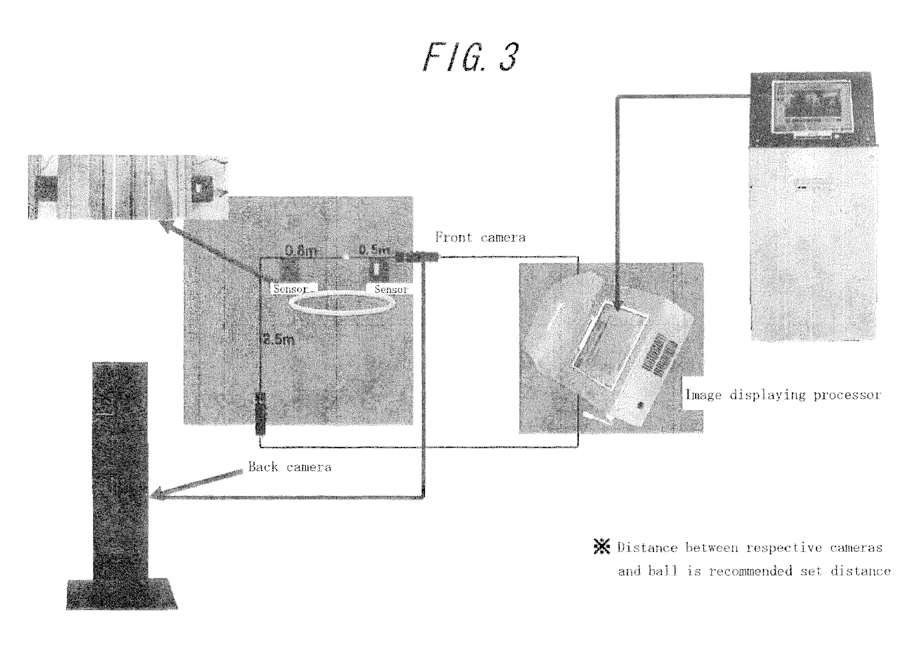

Moreover, as shown in Fig. 3, the above described motion analyzer according to the present invention comprises an image display processing means including an imaging portion having at least a couple of cameras and a regeneration means having an image display portion displayed by two juxtaposed screens, two screen type motion analyzing tool having transmission button to Web, in which each screen is individually displayed and analyzed, the motion photographing in two directions and at same lesson angle is performed, a simultaneous regeneration of the motion image in two directions can be performed, straight-curve line and circle or the like can be drawn freely on the motion image for lesson, comparison with other motion can be performed because of the same lesson angle, and even the face angle can be identified, a simple photograph operating means having a simple photographing mechanism according to a touch panel and an automatic motion photographing mechanism according to an infrared sensor and for making a motion photographing possible according to own timing, an user management means having an ID issue function, for managing the motion image by ID, and having management terminal, that grasps usage condition about customers information and system, a preservation means of motion image capable of printing out as sequential photographs, an accounting means having a coin box for collecting motion photographing fee.

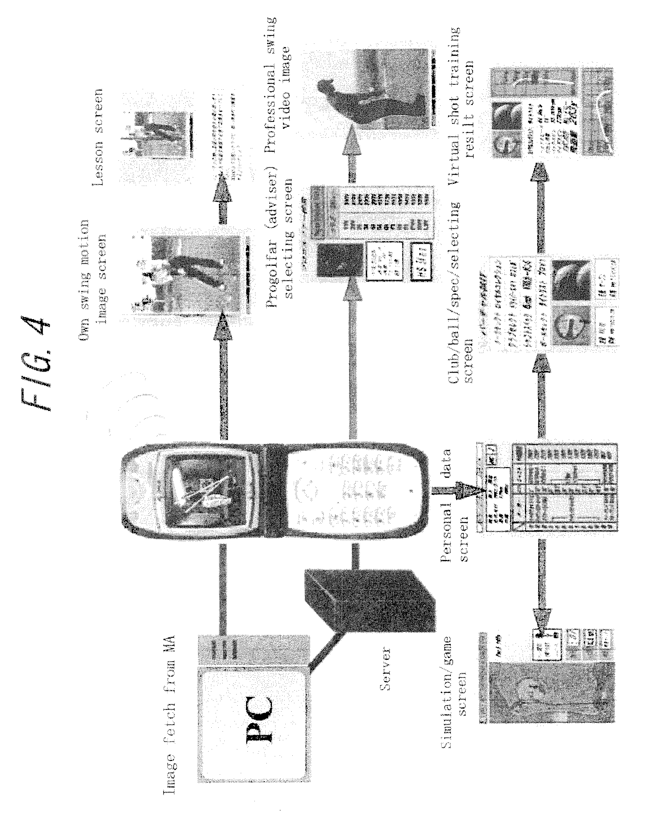

Further in the present invention, as shown in Fig. 4, the image from the motion analyzer is downloaded in the personal computer, various information can be delivered from the personal computer to user's cellular phone directly or through the server.

As a screen that receives this information, there are the above own swing video image screen, lesson screen, pro golfer (instructor) selecting screen, swing motion image screen of golf pro, personal data screen, simulation/game screen, club/ball/spec/selecting screen, virtual shot training result screen et a1.

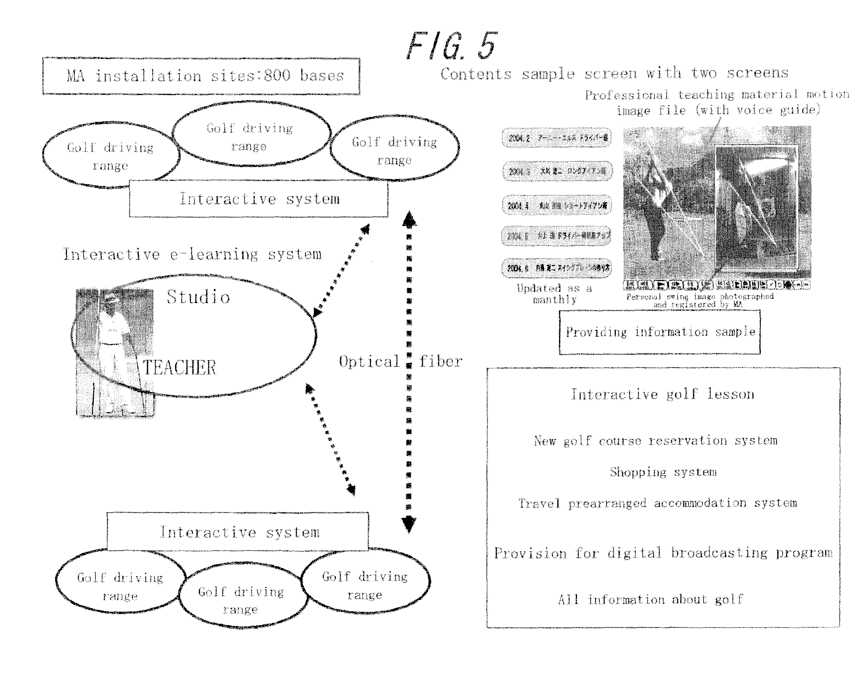

Further, as shown in Fig. 5, a plurality of golf driving ranges to which the motion analyzer of the present invention is installed and instructor (teacher) of the studio are connected with the optical fiber, the interactive system according to an interactive E-learning system is adopted, the Internet lesson system according to the present invention can also be executed.

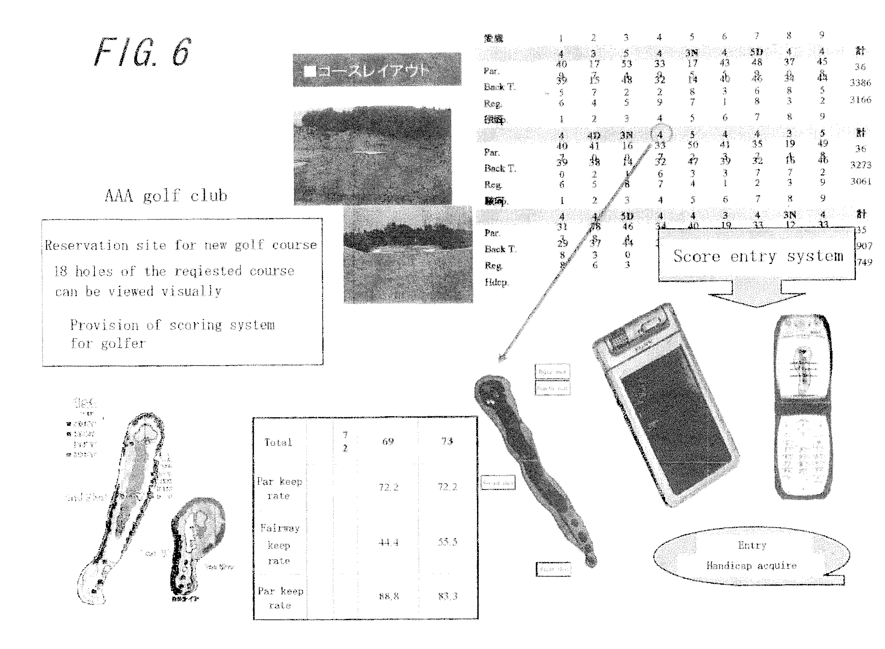

Moreover, as shown in Fig. 6, by using the cellular phone, and by viewing simulation/game screen, club/ball/spec/selecting screen, the virtual shot training result screen et a1, service to the golfer is performed, and 18 holes of the requested course can be viewed visually, on the reservation site in a new golf course. Moreover, the scoring system for the golfer can also provide.

### [Industrial applicability utility]

In this way, the present invention can utilize to the teleconferencing that can attend various conferences of the company even in the remote place by using the motion analyzer of the present invention through the Internet.
Further, The present invention can be used for not only the lesson of golf but also the lesson of baseball, soccer, dance, volleyball, and Noh play or the like.

### [Brief explanation of drawing]

[Fig. 1]
   Fig. 1 is an explanatory view showing the system of the Internet golf lesson that uses the motion analyzer of the present invention.
[Fig. 2]
   Fig. 2 is an explanatory view showing the system that constructs the business model of the golf training by using the motion analyzer of the present invention.
[Fig. 3]
   Fig. 3 is an explanatory view showing the constitution of the motion analyzer of the present invention.
[Fig. 4]
   Fig. 4 is an explanatory view showing various service modes to serve the golf lesson through the Internet with the cellular phone by using the motion analyzer of the present invention.
[Fig. 5]
   Fig. 5 is an explanatory view showing the system that constructs the interactive system according to an interactive E-learning system by using the motion analyzer of the present invention.
[Fig. 6]
   Fig. 6 is an explanatory view showing the mode performing service to the golfer who informs of the simulation and virtual shot training result of golf course on the cellular phone by using the motion analyzer of the present invention.

## Claims

1. An internet lesson system comprising: a motion analyzer (MA) including an image displaying processor for processing and displaying images to which the training person' s motion is photographed from arbitrary 2 directions of side, forward and rear, and in which two screen motion analyzing tool is installed, means provided to the motion analyzer and for entering the processed image from the motion analyzer to a motion data base provided to Web server on the internet, further comprising: a personal computer or a cellular phone on instructor's side where two screen motion analyzing tool is downloaded by accessing the motion data base of the Web server through the Internet and a personal computer or a cellular phone on user side where two screen motion analyzing tool is downloaded by accessing the motion data base of the Web server through the internet, wherein the user applies for the lesson from his personal computer or from the above motion analyzer to the instructor in the remote place, to receive the pointed advice from the instructor while comparing own motion of sports, performance or action etc. and instructor's motion of sports, performance or action, etc. on the two screen motion analyzing tool.

2. An internet lesson system as claimed in claim 1, wherein the above motion analyzer comprises an image display processing means including an imaging portion having at least a couple of cameras and a regeneration means having an image display portion displayed by two juxtaposed screens, two screen type motion analyzing tool having transmission button to Web, in which each screen is individually displayed and analyzed, the motion photographing in two directions and at same lesson angle is performed, a simultaneous regeneration of the motion image in two directions can be performed, straight-curve line and circle or the like can be drawn freely on the motion image for lesson, comparison with other motion can be performed because of the same lesson angle, and even the face angle can be identified, a simple photograph operating means having a simple photographing mechanism according to a touch panel and an automatic motion photographing mechanism according to an infrared sensor and for making a motion photographing possible according to own timing, an user management means having an ID issue function, for managing the motion image by ID, and having management terminal, that grasps usage condition about customers information and system, a preservation means of motion image capable of printing out as sequential photographs, and an accounting means having a coin box for collecting motion photographing fee.

3. An internet lesson system as claimed in claim 2, wherein the accounting means collects a charge for CD-ROM or the printout by the installer of the motion analyzer, or is a settlement according to credit and transfer on the Internet.
